# EUROPÄISCHE PATENTSCHRIFT

(11) **EP 2 318 175 B1**
(45) Veröffentlichungstag und Bekanntmachung des Hinweises auf die Patenterteilung: **08.02.2012**
(21) Anmeldenummer: 09777870.8
(22) Anmeldetag: 13.08.2009
(51) Int. Cl.: B23P 11/02, H05B 6/14, H05B 6/38

(54) **INDUKTIVE SPANNVORRICHTUNG FÜR DAS EIN- UND AUSSPANNEN VON WERKZEUGEN**
INDUCTIVE CLAMPING DEVICE FOR CLAMPING AND UNCLAMPING TOOLS
DISPOSITIF DE SERRAGE INDUCTIF POUR LE SERRAGE ET DESSERRAGE D'OUTILS

(30) Priorität: 04.09.2008 DE 102008045781
(43) Veröffentlichungstag der Anmeldung: 11.05.2011
(73) Patentinhaber: Franz Haimer Maschinenbau KG, 86568 Hollenbach-Igenhausen (DE)
(72) Erfinder: HAIMER, Franz, 86568 Hollenbach-Igenhausen (DE); HAIMER, Josef, 86568 Hollenbach- Igenhausen (DE)
(74) Vertreter: Bockhorni & Kollegen
(86) Internationale Anmeldenummer: PCT/EP2009/005887
(87) Internationale Veröffentlichungsnummer: WO 2010/025814

(56) Entgegenhaltungen:
- DE-A1-102005 005 892
- DE-A1-102005 014 984
- DE-A1-102006 016 103

## Beschreibung

Die Erfindung betrifft eine induktive Spannvorrichtung gemäß Oberbegriff des Anspruchs 1, also einer Vorrichtung, mit der durch induktive Erhitzung Werkzeuge durch Schrumpfpassung in einem Werkzeughalter fixiert werden können.

Für einen schnellen Werkzeugwechsel von Rotationswerkzeugen, wie Fräser, Bohrer u. dgl., sind Schnellwechselsysteme für Werkzeuge bekannt, die nach dem Induktionsprinzip arbeiten (vgl. DE 39 25 641 A1). Hierbei werden Werkzeughalter für die Aufnahme der einzuspannenden Werkzeuge verwendet, die eine Spannhülse aufweisen, deren Aufnahmebohrung kleiner als der Außendurchmesser des Werkzeugschafts des einzuspannenden Werkzeugs ist. Durch eine konzentrisch auf die Spannhülse aufgesetzte Induktionsspule, die aus einem Stromgenerator mit Wechselstrom oder gepulstem Gleichstrom einer Frequenz von bspw. 10 bis 50 kHz gespeist wird, werden innerhalb der Spannhülse Wirbelströme aufgrund der eingeleiteten Magnetflussfeldes der Induktionsspule erzeugt, die zu einer Erwärmung der Spannhülse und damit zu einer entsprechenden Aufweitung der Aufnahmebohrung der Spannhülse führen. Das dann mit seinem Schaft in die Aufnahmebohrung der Spannhülse eingesetzte Werkzeug wird nach entsprechender Abkühlung der Spannhülse reibschlüssig durch Schrumpfpassung innerhalb der Aufnahmebohrung der Spannhülse gehalten. Für die Entnahme des Werkzeugs wird die Spannhülse wiederum induktiv erwärmt, so dass sich die Aufnahmebohrung entsprechend aufweitet und das Werkzeug ohne weiteres entnommen werden kann. Um die gezielte Erwärmung der Spannhülse zu begünstigen sind sog. Magnetflusskonzentratoren bekannt (vgl. "Steel Heat Treatment Handbook", Marcel Dekker, IR, INC 1997, Kapitel 11 A, Induction Heat Treatment), die insbesondere auf beiden Stirnseiten aber auch am Außenumfang der Induktionsspule angeordnet werden und die von der Induktionsspule erzeugten Magnetflusslinien bündeln und gezielt in den zu erwärmenden Bereich der Spannhülse einführen. Derartige Magnetflusskonzentratoren können aus sog. Trafoblechen gebildet sein, die ringförmig gruppiert an den Stirnflächen der Induktionsspule angeordnet sind, oder bestehen aus oxidkeramischem Werkstoff, insbesondere Ferrit. Diese Werkstoffe zeichnen sich dadurch aus, dass sie magnetisch leitend, jedoch elektrisch nicht leitend sind.

Bekannte induktive Ein- und Ausspannvorrichtungen mit an der Stirnfläche der Induktionsspule angeordneten Magnetflusskonzentratoren verwenden häufig ringartige Konzentratorelemente (vgl. JP 49-100434 oder DE 199 15 412 A1). Bei diesen bekannten Vorrichtungen erstrecken sich die ringartigen Konzentratorelemente nicht nur über die Stirnfläche der Induktionsspule sondern erstrecken sich zumindest teilweise auch über die freie Stirnfläche des zum Zwecke der Einspannung aufzuwärmenden Bauteils. Der Nachteil dieser Vorrichtungen besteht allerdings darin, dass sie jeweils nur für die Aufnahme von Bauteilen, etwa Werkzeugen, mit einem bestimmten Durchmesser ausgelegt sind, was insbesondere für Werkzeugwechselvorrichtungen nachteilhaft ist, da in der Regel Werkzeuge mit unterschiedlichem Durchmesser abwechselnd eingespannt werden müssen, für die dann auch unterschiedliche Spannhülsengrößen gebraucht werden.

Dies verteuert nicht nur ein Schnellwechselsystem sondern erschwert auch dessen Handhabung.

Zur Behebung dieses Nachteils ist es bekannt (DE 10 2005 014 984 A1), einen mehrteiligen Induktionsspulenaufbau zu verwenden, der sich insbesondere aus zwei Spuleneinheiten zusammensetzt, die als ein Aufbau auf eine Spannhülse konzentrisch gesetzt und relativ zueinander axial bzgl. der von der Spannhülse aufgespannten Drehachse verstellbar sind. Dadurch lässt sich die Länge des Induktionsspulenaufbaus an die jeweilige Größe der verwendeten Spannhülse anpassen. Bekanntermaßen werden für Werkzeuge mit größerem Schaftdurchmesser größere Spannhülsen verwendet, die eine längere Passungslänge für das Einspannen des Werkzeugschaftes aufweisen als Spannhülsen für Werkzeuge mit kleinerem Durchmesser. Durch entsprechende Axialeinstellung der Spuleneinheiten des Induktionsspulenaufbaus relativ zueinander in Anpassung an die entsprechende Größe der Spannhülse lässt sich damit eine solche induktive Spannvorrichtung für unterschiedliche Spannhülsen und damit Werkzeugdurchmesser verwenden. Um bei Werkzeugen mit unterschiedlichen Durchmessern auch eine gute Einleitung der vom Induktionsspulenaufbau erzeugten Magnetflusslinien in die Spannhülse zu erreichen ist bei der bekannten Vorrichtung zusätzlich zur Axialverstellung des Induktionsspulenaufbaus auch eine Verstellung des Durchmessers des Magnetfeldkonzentrators vorgesehen, der bei dieser bekannten Vorrichtung durch ringartig gruppierte blendenartige Konzentratorelemente gebildet ist, die sich gegenseitig überlappen und längs einer radialen Ebene senkrecht zu der von der Spannhülse aufgespannten Drehachse radial nach innen verschwenkt werden können. Dadurch können die blendenartigen Konzentratorelemente geeignet in entsprechende Überdeckung mit der freien Stirnfläche einer Spannhülse mit unterschiedlicher Größe verschwenkt werden. Die axiale Verstellung des Induktionsspulenaufbaus und die radiale Verstellung der Konzentratorelemente ist miteinander gekoppelt und erfolgt über einen drehbaren Stellring, über dessen Drehstellung sowohl die relative axiale Lage der zueinander verfahrbaren Spuleneinheiten wie auch die radiale Einschwenkstellung der blendenartigen Konzentratorelemente bestimmt wird. Diese Vorrichtung hat sich in der Praxis bewährt, lässt sich aber insbesondere mit Hinblick auf automatisierte Abläufe aber auch mit Hinsicht auf eine gewünschte gezielte optimierte Einleitung der von den Konzentratorelementen gebündelten Magnetflusslinien in die zu erwärmende Spannhülse zur Aufnahme des Werkzeugs noch verbessern.

Die DE 10 2005 005892 A1 zeigt eine Induktionsspuleneinheit, bei der Konzentratorelemente in radialer Richtung an die zu erwärmende Spannhülse heraugeführt werden und desen freie Stirnfläche zumindest teilweise axial überdecken.

Aufgabe der Erfindung ist es, eine induktive Spannvorrichtung für das Ein- und Ausspannen von Werkzeugen mit einer axialen Lageverstellung eines aus mindestens zwei Spuleneinheiten gebildeten Induktionsspulenaufbaus und Durchmesserverstellung der Konzentratorelmente zu schaffen, bei der auch in Anbetracht der axialen Lageveränderung der Spuleneinheiten des Induktionsspulenaufbaus in Anpassung an Spannhülsen mit unterschiedlicher Größe eine optimale Ausrichtung der Spuleneinheiten und auch der Konzentratorelemente relativ zur Spannhülse möglich ist. Dabei soll eine kompakte Bauweise der Spannvorrichtung gewährleistet und auch eine Umrüstung auf halbautomatischen oder vollautomatischen Betrieb in einfacher Weise möglich sein.

Diese Aufgabe wird erfindungsgemäß durch die im kennzeichnenden Teil des Anspruchs 1 enthaltenen Merkmale gelöst, wobei zweckmäßige Weiterbildungen der Erfindung durch die in den Unteransprüchen enthaltenen Merkmale gekennzeichnet sind.

Die erfindungsgemäße Induktionsspannvorrichtung weist zum einen einen die Spannhülse konzentrisch umgebenden Induktionsspulenaufbau aus bevorzugt zwei zueinander gleichachsig angeordneten Spuleneinheiten auf, die axial relativ zueinander verstellbar sind, und umfasst eine Konzentratoranordnung aus vereinzelten Konzentratorelementen, welche in Betriebsstellung der auf die Spannhülse aufgesetzten Induktionsspule in eine Position verfahrbar sind, in der sie die zu erwärmende Spannhülse an deren freier Stirnfläche zumindest teilweise radial überdecken. Hierbei werden die Konzentratorelemente linear, also translatorisch in Richtung auf die durch die Spannhülse aufgespannte Drehachse zugestellt und zwar sowohl mit einer radialen wie auch axialen Komponente. Dadurch werden die Konzentratorelemente beispielsweise in Anpassung an eine Spannhülse mit geringerer Größe für die Aufnahme eines Werkzeugs mit geringem Durchmesser nicht nur radial nach innen zu der durch die Spannhülse aufgespannten Drehachse zugestellt bzw. verfahren sondern auch in axialer Richtung in Richtung auf die freie Stirnfläche der entsprechenden Spannhülse zugestellt. Hierdurch lässt sich je nach verwendeter Spannhülse eine optimale Ausrichtung sowohl der axial verstellbaren Spuleneinheiten und der die freie Stirnfläche der zu erwärmenden Spannhülse überdeckenden Konzentratorelemente erreichen.

Hierbei ist es für die Lage der Spuleneinheiten zweckmäßig, dass diese optimal auf die jeweilige Passungslänge der Spannhülse eingestellt bzw. ausgerichtet werden können, wobei insbesondere die dem freien Ende der Spannhülse zugeordnete Spuleneinheit möglichst in Ausrichtung mit dem vorderen Ende der Spannhülse justiert werden soll. Zudem ist es für die gebündelte Einleitung der Magnetflusslinien und damit für eine optimierte Erwärmung der Spannhülse vorteilhaft, wenn zugleich die Konzentratorelemente möglichst nahe an die freie Stirnfläche der zu erwärmenden Spannhülse zugestellt werden. Dies lässt sich nunmehr mit der radial und axial überlagerten Zustellung der Konzentratorelemente in sehr vorteilhafter Weise erreichen und zwar bei außerordentlich kompakter Bauweise der Spannvorrichtung.

Ferner wird bei der erfindungsgemäßen Spannvorrichtung gewährleistet, dass die axiale Verstellung der Spuleneinheiten des Induktionsspulenaufbaus zu einander und die Zustellung der Konzentratorelemente unabhängig voneinander erfolgen kann, was für eine optimale Ausrichtung der für die Magnetflusseinleitung in die Spannhülse maßgeblichen Bauteile, also Spuleneinheiten und Konzentratorelemente, von Bedeutung ist. Zugleich wird hierdurch ein vollautomatischer aber auch halbautomatischer Betrieb einer solchen Vorrichtung möglich, in dem der Verstellmechanismus für den Induktionsspulenaufbau und der Verstellmechanismus für die Durchmesserverstellung der Konzentratorelemente über separate Antriebe angetrieben werden.

In vorteilhafter Weise sind die Konzentratorelemente linear in Richtung der durch die Spannhülse aufgespannten Drehachse über Schieber verfahrbar, wozu die Konzentratorelemente an den nach innen gerichteten Stirnseiten der Schieber aufgenommen sind. Hierbei hat es sich als eine praxisgerechte Ausführungsform vorteilhaft herausgestellt, dass insgesamt sechs über den Umfang verteilt angeordnete Schieber verwendet werden, die jeweils über lineare in Art eines Sternes angeordnete Führungen relativ zur Drehachse verstellbar sind. Dabei schließt die Stellrichtung der Schieber mit der Drehachse bevorzugt einen Winkel von etwa 60 bis 80° und zwar besonders bevorzugt 65 bis 75° ein. Die Schlitten bzw. Schieber sind hierbei aus magnetisch nicht leitendem Material und zwar vorzugsweise aus keramischem Material oder Kunststoff hergestellt und in Nuten eines Führungskranzes aufgenommen, der ebenfalls aus magnetisch nicht leitendem Material, insbesondere Kunststoff hergestellt ist. Dieses ist zweckmäßiger Weise innerhalb eines weiteren ringförmigen Konzentratorkörpers aufgenommen, der im Wesentlichen axial die auf der Mantelfläche der Spuleneinheiten angeordneten Magnetflusskonzentratoren verlängert.

Insbesondere mit Blickpunkt auf die kompakte Bauweise der Spannvorrichtung ist es zweckmäßig, wenn die am inneren Ende der Schieber angeordneten Konzentratorelemente abwechselnd axial zu einander versetzt und überlappend ausgebildet sind, was zudem den Vorteil hat, dass in jeder Radialstellung der Konzentratorelemente in Bezug auf die durch die Spannhülse aufgespannte Drehachse ein quasi geschlossener Magnetfeldkonzentrator gebildet wird, der sich aus den einzelnen Konzentratorelementen aufbaut, die sozusagen ringartig um die Drehachse gruppiert sind.

Die Zustellbewegung der Schieber erfolgt über einen geeigneten Nocken- / Steuerkurvenmechanismus, wobei die Steuerkurven in Anpassung an die zu verwendenden unterschiedlichen Größen der Spannhülsen ausgelegt sind.

Zweckmäßiger Weise sind die Konzentratorlemente aus Ferrit gebildet. In diesem Zusammenhang ist es zweckmäßig, wenn zumindest ein Teil der Schieber und zwar bevorzugt jeder zweite Schieber eine Anschlagleiste aus magnetisch nicht leitendem Material, vorzugsweise aus Aluminium, aufweist, die sich axial über die Konzentratorelemente über ein gewisses Maß hinaus erstreckt und damit als Anschlag gegenüber der freien Stirnfläche der Spannhülse wirkt. Der Überstand der Anschlagleisten gegenüber den Konzentratorelementen liegt hierbei im Bereich von 0,2 bis 0,6 mm und zwar bevorzugt von 0,3 bis 0,4 mm. Dadurch wird eine schonende Behandlung der aus sprödem Material hergestellten Konzentratorelemente gewährleistet.

Nach einem weiteren Aspekt der Erfindung kann insbesondere auf der freien Stirnseite der Spannvorrichtung ein Induktionsaufsatz aus magnetisch nicht leitendem jedoch elektrisch leitendem Material vorgesehen sein, der insbesondere aus Kupfer hergestellt ist. Der Induktionsaufsatz bewirkt eine aktive Abschirmung des nach außen über die Spannvorrichtung vorstehenden Werkzeugs gegenüber verbleibenden Streufeldern der Induktionsspule in diesem Bereich. Durch den Induktionsaufsatz werden im Falle von Streufeldern Wirbelströme im Aufsatz erzeugt, die ihrerseits zur Bildung eines Magnetfeldes führen, welches Streufelder des Induktionsspulenaufbaus überlagern und damit schwächen. Der Induktionsaufsatz in Verbindung oder alternativ zu einem im Übergangsbereich zwischen dem Spulenaufbau und der Spannhülse angeordnetem Abschirmkragen aus magnetisch leitendem Material führt zu einer entsprechenden zielgerichteten Lenkung der vom Spulenaufbau erzeugten Magnetfelder in Richtung auf die Spannhülse und auch zu einer aktiven Abschirmung des über die Spannvorrichtung vorstehenden Werkzeugabschnittes, was insgesamt zu einer Optimierung des Einspann- aber auch Ausspannvorganges führt.

Für die axiale Verstellung der Spuleneinheiten des Induktionsspulenaufbaus sind zweckmäßiger Weise Führungsringe vorgesehen, die zueinander konzentrisch und übergreifend angeordnet sind und von denen der innen liegende Führungsring vorrichtungsfest, jedoch der äußere Führungsring verdrehbar gestaltet ist. Durch Drehen des äußeren Führungsringes kommt es zu einer Axialverschiebung der beiden Spuleneinheiten des Induktionsspulenaufbaus, wobei auch dies wiederum über einen Nocken- / Steuerkurvenmechanismus erfolgt, der geeignet in Anpassung an die unterschiedlichen mit der Spannvorrichtung zu verwendenden Spannhülsen ausgelegt ist.

Durch entsprechende Drehverstellung des äußeren Führungsringes lässt sich damit die axiale Lage der beiden Spuleneinheiten relativ zu einander gewünscht einstellen.

Zweckmäßiger Weise erfolgt die Zustellbewegung der auf Schiebern aus magnetischen nicht leitendem Material angeordneten Konzentratorelemente durch einen auf dem Außenumfang des äußeren Führungsringes gelagerten Steuerkranz an dem frontseitig ein Steuerring angeordnet ist, der über einen Umfang verteilt Steuerkurven für die jeweiligen Schieber aufweist. Auf den Schiebern sind entsprechende Nockenstifte angeordnet, die mit diesen Steuerkurven kommunizieren. Der Steuerkranz ist hierbei über eine Wälzlagerung auf dem äußeren Führungsring gelagert, so dass dieser unabhängig von diesem äußeren Führungsring gedreht werden kann. Dadurch ist die Zustellung der Schieber völlig unabhängig von der Verstellung der Spuleneinheiten des Induktionsspulenaufbaus, was für einen vollautomatisierten Betrieb von Vorteil ist. Die Lagerung des Steuerkranzes auf dem äußeren Führungsring erfolgt hierbei zweckmäßiger Weise über ein vorgespanntes Kugellagerband wodurch sich eine leicht gängige und spielfreie Verstellung des Steuerkranzes zum Zwecke der Zustellung der die Konzentratorelemente tragenden Schieber ergibt.

Zum Zwecke eines vollautomatischen bzw. ggf. auch eines halbautomatischen Betriebs der Spannvorrichtung ist es zweckmäßig, wenn sowohl der Steuerkranz für die Zustellbewegung der Schieber wie auch der äußere Führungsring für die Verstellung der Spuleneinheiten relativ zueinander jeweils mit einer Verzahnung versehen ist, insbesondere mit einem zumindest teilweise umlaufenden Zahnkranz, so dass sowohl der Steuerkranz wie auch der äußere Führungsring motorisch unter vorteilhafter Zwischenschaltung eines entsprechenden Getriebes antreibbar sind. Als Getriebe eignen sich insbesondere Schneckenwellen, die mit den Verzahnungen auf dem Steuerkranz und dem äußeren Führungsring kommunizieren. Jede der beiden Schneckenwellen ist hierbei zweckmäßiger Weise jeweils über ein Zwischengetriebe aus einem Zahnrad und einem Ritzel mit einer Motorwelle verbunden. Beide Motoren sind zweckmäßiger Weise auf einem Schlitten montiert, der über eine Führungsleiste auf einem vorrichtungsfesten Tisch linear geführt ist, so dass die beiden auf dem Schlitten angeordneten Motoren einschließlich der Zwischengetriebe relativ in Anpassung an die axiale Verstellbarkeit der Spuleneinheiten verfahrbar sind.

In vorteilhafter Weise sind durch diesen Aufbau sowohl der Durchmesser, den die ringartig gruppierten Konzentratorelemente um die durch die Spannhülse aufgespannte Drehachse einschließen, und die Lageeinstellung der Spuleneinheiten des Induktionsspulenaufbaus relativ zu einander separat verstellbar, was insbesondere steuerbare Verstellmöglichkeiten für Sonderanwendungen bietet. Ferner beeinflussen sich hierbei Verstellung des Durchmessers und Verstellung der Länge des Induktionsspulenaufbaus nicht gegenseitig, was für eine Ansteuerung bei einem automatisierten Betrieb sehr wesentlich ist.

Im Falle eines automatisierten Betriebs werden für einen vollautomatischen Schrumpfprozess die entsprechenden Geometriedaten eines Futters bzw. einer Spannhülse eines Werkzeughalters automatisch bestimmt, wozu das Futter bzw. der Werkzeughalter mit einem entsprechenden Datenträger belegt sein kann. Wahlweise können die Daten einer externen Datenbank entnommen werden. Dabei können die Geometriedaten des Futters automatisch über digitale Bildverarbeitung, Laserscanner, Abstandssensoren u. dgl. bestimmt und über einen Rechner die Schrumpfparameter automatisch zugeordnet und damit die Spule automatisch eingestellt werden. Der Vorteil der Verbindung eines Schneckenradgetriebes besteht ferner darin, dass dadurch ein selbsthemmendes Getriebe verwirklicht ist, also gesonderte Raststellungen in den Steuerkurven nicht mehr erforderlich sind. Auch zusätzliche Verriegelungsmechanismen können hierbei entfallen. Zweckmäßiger Weise werden Motoren mit Absolutgebern verwendet, so dass kein Anfahren von Referenzpunkten erforderlich ist. Die Stromversorgung der Antriebseinheit wird hierbei zweckmäßiger Weise über ein Steuersignal zusammen mit der Schrumpfelektronik ein- und ausgeschaltet. Der Aufbau ist ferner insgesamt so gestaltet, dass die Spannvorrichtungen ohne weiteres auf Automatikantrieb nachrüstbar sind, wozu lediglich der entsprechende Tisch mit dem Aufspannschlitten für die Motoren und das Getriebe montiert werden müssen.

Nachfolgend wird ein Ausführungsbeispiel der Erfindung anhand der Zeichnung beschrieben. Darin zeigen
- Fig. 1: eine Schnittansicht durch eine Ausführungsform der erfindungsgemäßen induktiven Spannvorrichtung in einer ersten Betriebsposition,
- Fig. 2: eine Schnittansicht der in Fig. 1 dargestellten induktiven Spannvorrichtung in einer zweiten Betriebsposition,
- Fig. 3: eine stirnseitige Ansicht der in Fig. 1 dargestellten Vorrichtung von der linken Seite her gesehen zur Darstellung von Details von linear verfahrbaren Schiebern mit daran angeordneten Konzentratorelementen der Vorrichtung,
- Fig. 4: eine Seitenansicht der Vorrichtung nach den vorhergehenden Figuren, sowie
- Fig. 5: eine weitere Seitenansicht der Vorrichtung nach Fig. 4, jedoch in einer Ansicht um 90° versetzt.
- Fig. 6: eine Seitenansicht einer weiteren analogen Ausführungsform einer erfindungsgemäßen induktiven Spannvorrichtung entsprechend der Ausfiihrungsform nach den Figuren 1 bis 4 mit zusätzlichen Details
- Fig. 7: die Darstellung einer Einzelheit X aus Figur 6 in vergrößerter Darstellung (Maßstab 2:1) sowie
- Fig. 8: die Darstellung einer Einzelheit Y aus Figur 6. wiederum in vergrößerter Darstellung (Maßstab 2:1)

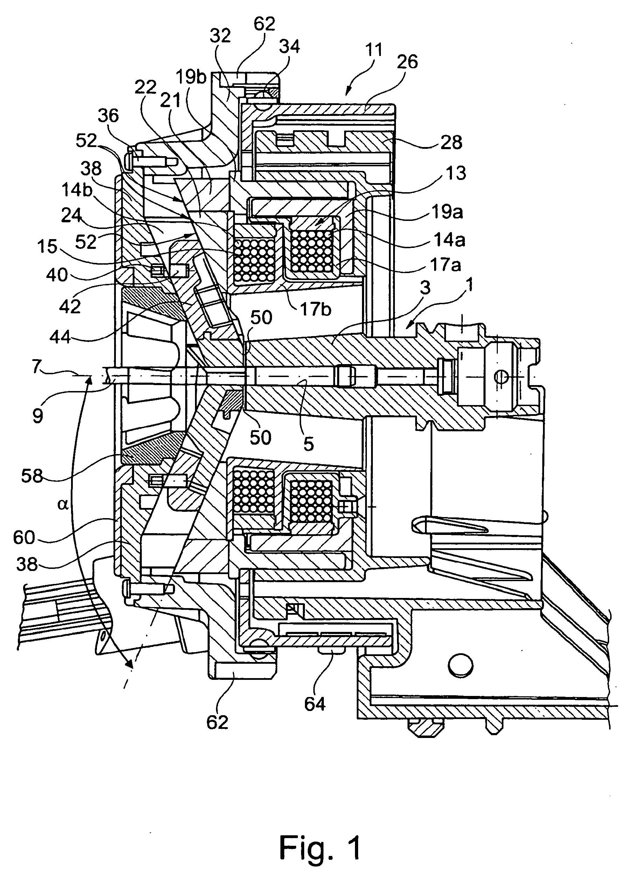

Fig. 1 zeigt mit 1 einen üblichen standardmäßigen Werkzeughalter in Art eines Adapters, der zum Einspannen von Werkzeugen, wie etwa Drehmeißel, Bohrer u. dgl. in eine schnell laufende Werkzeugmaschine, wie etwa eine Drehmaschine, dient. Der Werkzeughalter 1 ist aus einem zumindest elektrisch leitenden Werkstoff gebildet, wie etwa Stahl, und weist an seinem links dargestellten vorderen Ende eine Aufnahme- oder Spannhülse für das Einspannen eines Werkzeugs auf, wobei das Werkzeug mit seinem Werkzeugschaft in der Spannhülse 3 eingespannt wird. Die Spannhülse 3 ist in Art eines Kegels ausgebildet und weist eine zentrale Bohrung 5 auf, die eine mit 7 bezeichnete Drehachse definiert und insbesondere zum freien Ende der Spannhülse 3 hin offen ist. Über diese Öffnung wird der hier nur schematisch dargestellte Schaft 9 des einzuspannenden Werkzeugs eingeführt, so dass der Schaft dann in der Bohrung 5 zu liegen kommt. Der Außendurchmesser des Schafts 9 ist etwas größer als der freie Nenndurchmesser der Aufnahmebohrung 5, so dass der Schaft 9, so er in die Bohrung 5 eingesetzt ist, in der Spannhülse 3 für die Übertragung des Arbeitsdrehmoments reibschlüssig im Presssitz gehalten ist.

Um den Werkzeugschaft 9 in den Werkzeughalter 1 einsetzen und aus diesem entnehmen zu können, wird die Spannhülse 3 durch Erwärmen aufgeweitet. Hierzu dient die allgemein mit 11 bezeichnete induktive Ein- und Ausspannvorrichtung, welche einen mit 13 bezeichneten Induktionsspulenaufbau bestehend aus zwei Spuleneinheiten 14a und 14b aufweist, wobei die Wicklungen in den beiden Spulenkörpern 15 nur rein schematisch mit Kreisen dargestellt sind.

Für das Erwärmen der Spannhülse 3 wird die Spannvorrichtung 11 von links her auf die Spannhülse 3 aufgesetzt, wobei dann die Induktionsspule 13 bzw. die beiden Spuleneinheiten 14a und 14b konzentrisch die Spannhülse 3 umschließen. Die Induktionsspule wird über einen nicht dargestellten Stromgenerator mit Wechselstrom oder gepulstem Gleichstrom einer Frequenz von bspw. 10 bis 50 kHz gespeist. Der von der angenähert zylindrischen Wicklung der Spulenkörper 15 erzeugte Magnetfluss induziert in der Spannhülse 3 Wirbelströme, die die Spannhülse in relativ kurzer Zeit erwärmen und damit die Aufnahmebohrung 5 entsprechend aufweiten, so dass der mit Übermaß ausgelegte Werkzeugschaft 9 entsprechend in die Aufnahmebohrung 5 der Spannhülse 3 eingeführt werden kann.

Nach Abkühlen der Spannhülse 3 schrumpft diese um den eingeführten Werkzeugschaft 9, so dass dieser reibschlüssig durch Schrumpfpassung der Spannhülse 3 und damit im Werkzeughalter 1 gehalten ist.

Für die Entnahme des Werkzeugs bedarf es wieder in analoger Weise der Erwärmung der Spannhülse über die Induktionsspule, so dass die Aufnahmebohrung 5 entsprechend aufgeweitet und dann das Werkzeug aus der Aufnahmebohrung 5 herausgezogen werden kann.

Jede Wicklung einer Spuleneinheit 14a, 14b und damit jeder Spulenkörper 15 ist entsprechend der Darstellung in Fig. 1 von einem aus temperaturfestem Kunststoff oder Keramik bestehendem Spulengehäuse 17a und 17b umgeben, wobei das Spulengehäuse 17b einen das Spulengehäuse 17a untergreifenden Hülsenabschnitt aufweist, so dass, wie weiter unten noch näher dargestellt ist, eine relative axiale Verstellung der beiden Spuleneinheiten 14a und 14b längs der Drehachse 7 möglich ist.

Der Spulenkörper 15 sowohl der Spuleneinheit 14b wie auch der Spuleneinheit 14a ist von einem hülsenartigen Konzentrator 19b bzw. 19a umgeben und zwar auf Seiten des Außenmantels der Spulenkörper. Die Konzentratorhülse 19b übergreift hierbei den zylindrischen Abschnitt der Konzentratorhülse 19a d. h. die beiden Hülsen sind entsprechend konzentrisch zu einander und zur Drehachse 7 ausgebildet und ineinander gesteckt, wiederum zum Zwecke der später noch beschriebenen axialen Verschieblichkeit der beiden Spuleneinheiten relativ zu einander. Die Konzentratorhülse 19a überdeckt hierbei zudem die Stirnseite der Spuleneinheit 14a an der rechten Seite von Fig. 1. Eine solche stirnseitige Überdeckung der Spuleneinheit 14 b liegt aber nicht für die Konzentratorhülse 19b vor, die lediglich konzentrisch die Spuleneinheit 14b ummantelt. Allerdings schließt sich an die linke Stirnseite der Konzentratorhülse 19b ein mit 21 bezeichneter Konzentratorring an, der ebenso wie die Konzentratorhülsen 19a und 19b aus magnetisch leitendem, aber elektrisch nicht leitendem Material, wie etwa aus einem oxidkeramischen Werkstoff, insbesondere Ferrit gebildet ist. Der Konzentratorring 21 setzt also die Konzentratorhülse 19b axial an deren freien Stirnseite fort, überdeckt aber nicht, wie aus Fig. 1 hervorgeht, die freie Stirnseite der Spuleneinheit 14b. Die freie Stirnfläche der Spuleneinheit 14b wird also in der dargestellten Ausführungsform nicht von einem Konzentrator abgeschlossen.

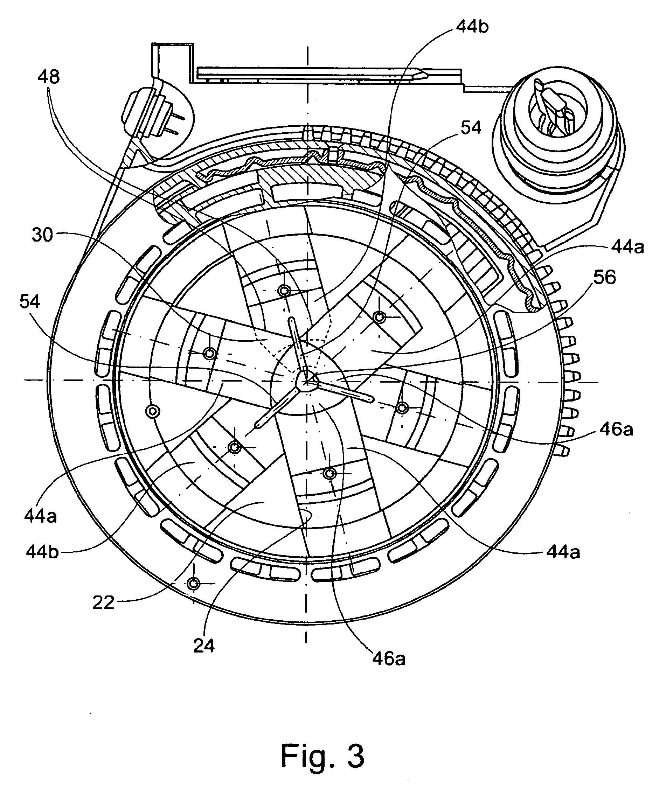

In der Öffnung des Konzentratorringes 21 ist ein Führungskranz 22 aus magnetisch nicht leitendem und vorzugsweise auch elektrisch nicht leitendem Material, wie etwa Kunststoff, angeordnet, der über den Umfang hin verteilt mehrere Führungsnuten 24 aufweist, die zur Aufnahme von weiter unten noch zu beschreibenden verstellbaren Schiebern dienen. Im dargestellten Ausführungsbeispiel sind insgesamt sechs umlaufende Führungsnuten 24 vorgesehen, wie sich insbesondere aus Fig. 3 ergibt.

Konzentrisch über den Induktionsspulenaufbau 13 sitzt eine mit 26 bezeichnete äußere Führungshülse, die zur relativen axialen Verstellung der beiden Spuleneinheiten 14a und 14b vorgesehen ist. Innerhalb des Führungsrings 26 sitzt ein weiterer innerer Führungsring 28, der vorrichtungsfest bzgl. der induktiven Spannvorrichtung ist. Dahingegen ist der äußere Führungsring 26 relativ zum Führungsring 28 drehbar. Auf dem Außenumfang 30 des inneren Führungsrings sind über den Umgang verteilt geeignete mehrere Steuerkurven vorgesehen, in die hier nicht dargestellte Nockenstifte des äußeren Führungsrings 26 eingreifen. Darüber hinaus ist die Konzentratorhülse 19b drehfest, aber längsverschieblich mit dem inneren Führungsring 28 verbunden. Im dargestellten Ausführungsbeispiel sind vier Steuerkurven vorgesehen.

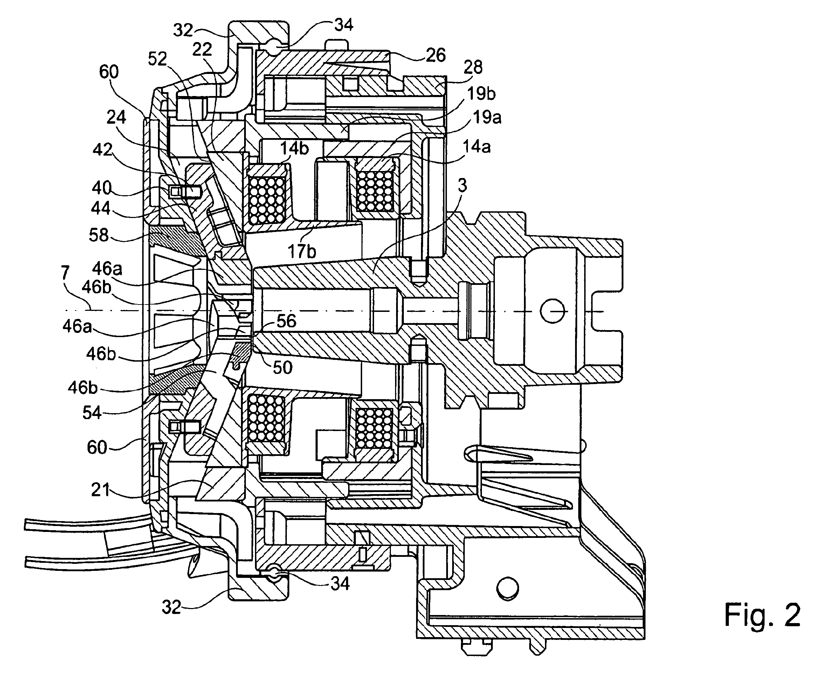

Wird der äußere Führungsring 26 beispielsweise manuell gedreht, dann wird in Folge des oben beschriebenen Nocken-Steuermechanismus dieser Führungsring 26 bspw. in Fig. 1 nach links axial verstellt und nimmt hierbei die Spuleneinheit 14b mit der Konzentratorhülse 19b, dem Konzentratorring 21 und dem darin angeordneten Führungskranz 22 entsprechend translatorisch nach links mit. Somit wird der Induktionsspulenaufbau 13 axial verlängert, in dem die Spuleneinheit 14b entsprechend translatorisch bzw. linear in Art eines Teleskops ausgefahren wird und zwar längs der Drehachse 7, wobei sich eine entsprechend ausgefahrene Stellung aus Fig. 2 ergibt.

Diese Art der Längsverstellung der Spuleneinheit 14b relativ zur Spuleneinheit 14a kann natürlich auf völlig unterschiedliche Art und Weise erfolgen und ist an sich bekannt, wozu beispielshalber auf die hier mit einbezogene DE 10 2005 014 984 A1 abgestellt wird, die bereits Eingangs zum gattungsgemäßen Stand der Technik beschrieben worden ist.

Im dargestellten Ausführungsbeispiel ergibt sich zwar entsprechend der Drehung des äußeren Führungsringes 26 eine Axialverstellung der Spuleneinheit 14b einschließlich der diesen umgebenden Konzentratorhülse 19b und den die Konzentratorhülse 19b nach außen hin axial vorsetzenden Konzentratorring 21 einschließlich des darin aufgenommenen Führungskranzes 22, wobei diese Elementen jedoch nur längsverschieblich sind, nicht jedoch mit dem äußeren Führungsring 26 drehfest gekoppelt sind, so dass diese Bauteile also nicht mit dem äußeren Führungsring 26 drehen.

Auf dem äußeren Führungsring 26 ist wiederum ein weiterer Gehäusering, nämlich ein Stellkranz 32 drehbar angeordnet und zwar hier über ein nur schematisch angedeutetes und auf dem äußeren Führungsring 26 angeordnetes Kugelradband, welches zweckmäßiger Weise vorgespannt ist, um Spiel zu vermeiden und eine leichtgängige Verstellung zu gewährleisten. Das Kugelradband ist mit 34 bezeichnet und weist in einem Band aufgenommen eine Vielzahl über den Umfang verteilt angeordneten Lagerkugeln auf. Derartige Bauteile sind bekannt, so dass sie im Einzelnen nicht beschrieben werden müssen.

Durch dieses Walzlager kann aber der Stellkranz 32 relativ zum äußeren Führungsring 26 sehr leicht spielfrei gedreht werden. Fest, nämlich durch die mit 36 angedeuteten Schraubverbindungen, ist schließlich ein Stellring 38 mit dem Stellkranz 32 verbunden, so dass dieser bei Drehen des Stellkranzes 32 mitgedreht wird. Der Stellring 38 weist auf seiner der Spannhülse 3 zugewandten Fläche mehrere und zwar vorzugsweise insgesamt sechs über den Umfang verteilt angeordnete Steuerkurven 40 auf. Mit diesen Steuerkurven 40 wirken Nockenstifte 42 zusammen, die an Schiebern 44 angeordnet sind, welche drehfest aber linear verschiebbar in den Führungsnuten 24 des Führungskranzes 22 aufgenommen sind.

Im dargestellten Ausführungsbeispiel sind insgesamt sechs in gleichmäßigem Winkelabstand über den Umfang verteilte Schieber 44 vorgesehen, wie sich recht deutlich aus Fig. 3 ergibt. Diese Schieber sind aus magnetisch nicht leitendem und vorzugsweise elektrisch nicht leitendem Material, insbesondere Kunststoff oder Keramik hergestellt und linear bzw. translatorisch in den Führungsnuten 24 in Richtung auf die Drehachse 7 verschiebbar gelagert. Entsprechend Fig. 3 sind die Nuten 24 und die darin verschiebbaren aufgenommenen Schieber 44 radial sternförmig um die Drehachse 7 gruppiert.

An den vorderen inneren Enden eines jeden Schiebers 44 sind Konzentratorelemente 46 vorgesehen, wobei im dargestellten Ausführungsbeispiel bei insgesamt sechs Schiebern 44 zwei verschiedene Konzentratorelemente 46a und 46b vorgesehen sind. Dies verdeutlicht sich am besten aus Fig. 3. Die in Fig. 3 mit 44a bezeichneten Schieber weisen an ihren inneren Enden die Konzentratorelemente 46a auf, wo hingegen die mit 44b bezeichneten anderen Konzentratorelemente mit 46b bezeichnete Konzentratorelemente aufweisen, von denen eines in Fig. 3 der Anschaulichkeit halber strichliert dargestellt ist ebenso wie derjenige Teil des Schiebers 44b, der hinter den beiden seitlich benachbarten Schiebern 44a liegt. D. h. die Konzentratorelemente 44a und 44b sind geringfügig axial zueinander relativ zur Drehachse 7 versetzt.

Um dies zu gewährleisten sind die Schieber 44b, die im übrigen mit ihren beiden Hauptflächen im Wesentlichen bündig mit denen der Schieber 44a sind, bei 48 abgestuft, so dass der in Fig. 3 strichliert dargestellte Schieberabschnitt bei 30 die vorderen Abschnitte der Schieber 44a untergreift. Diese Konstruktion ist deswegen gewählt, dass die in Fig. 3 dargestellten drei Konzentratorelemente 46a, die an den vorderen inneren Enden der Schieber 44a angeordnet sind, miteinander sozusagen einen quasi ringartigen Konzentrator ergeben, der wie ein geschlossener Konzentratorring wirkt, sich aber aus einzelnen Konzentratorelementen zusammensetzt. Dieser Konzentratorring bzw. die Konzentratorelemente überdecken in der Betriebsposition der Fig. 1 die freie Stirnfläche 50 der Spannhülse 3 radial und zwar vorzugsweise im Wesentlichen vollständig. Diese Bildung eines quasi ringförmigen Konzentrators aus den Konzentratorelementen 46 mit radialer Überdeckung der freien Stirnfläche 50 der Spannhülse 3 soll aber auch im Falle einer Spannhülse 3 mit größerem Durchmesser für die Einspannung eines Werkzeugschaft mit größerem Durchmesser erfüllt sein und damit auch in einer Position gemäß Fig. 2, in der die Schieber 44 in der nachfolgend noch angegeben Weise in Richtung von der Drehachse weg nach außen hin verschoben worden sind. Dies wird durch die oben beschriebene Anordnung und Ausbildung der Konzentratorelemente 46a und 46b erreicht, da in der weiter von der Drehachse 7 weggerückten Stellung der Schieber und damit der Konzentratorelemente sich die dann wechselweise überdeckenden Konzentratorelemente 46a und 46b wiederum einen quasi ringartigen Konzentrator miteinander bilden, der die freie Stirnfläche 50 der größer ausgelegten Spannhülse 3 gleichermaßen radial überdeckt, wie Fig. 2 recht deutlich zeigt.

Aus Fig. 2 ergibt sich auch sehr deutlich die für die Überlappung verantwortliche Ausbildung der Konzentratorelemente 46a und 46b und zwar aus der perspektivischen Darstellung der Konzentratorelemente 46a, 46b nahe der stirnseitigen Aufnahmeöffnung der Spannhülse 3. Ferner überdecken die Konzentratorelemente in den in den Fig. 1 und 2 äußerst dargestellten Betriebspositionen, nämlich in der nach innen zur Drehachse 7 verrückten Position der Schieber 44 in Fig. 1 und der nach außen gerückten Position der Schieber gemäß Fig. 2 die Stirnfläche der Spannhülse und schließen diese im Wesentlichen radial ab. Die Konzentratorelemente 46a und 46b erstrecken sich jedoch nicht in den Bereich der freien Stirnseite der Spuleneinheiten des Induktionsspulenaufbaus.

Die Steuerung der Schieber in die einzelnen Betriebpositionen erfolgt über den bereits beschriebenen Nocken-Steuerkurvenmechanismus 40, 42, wobei bei Drehung des Stellkranzes 32 und damit des Stellrings 38 die Stifte 42 in der Steuerkurve gleiten und dadurch die in den Führungsnuten 24 aufgenommenen Schieber 44 linear entweder in Richtung auf die Drehachse 7 oder von dieser weg verschoben werden. Hierdurch wird, wie oben beschrieben, der ringartige Kranz der Konzentratorelemente 46a, 46b aufgeweitet oder geschlossen (vgl. die Betriebsstellungen in den Fig. 1 und 2). Dies erfolgt je nach Größe der verwendeten Spannhülse 3. Hierzu sind die verteilt über den Umfang vorgesehenen Steuerkurven 40 entsprechend auf die für die Spannvorrichtung verwendbaren Spannhülsengrößen ausgelegt und ggf. indexiert, so dass je nachdem, in welchem Abschnitt der Steuerkurven 40 sich die Nockenstifte 42 befinden die damit gekoppelten Schieber entsprechend zur Drehachse 7 zugestellt sind. Derartige indexierte Steuerkurven sind bekannt, wozu wiederum auf den gattungsgemäßen Stand der Technik gemäß DE 10 2005 014 984 A1 verwiesen wird.

Wesentlich bei der erfindungsgemäßen Spannvorrichtung ist hierbei, dass die Zustellung der Schieber und damit der Konzentratorelemente 44 und 46 jeweils schräg zur Drehachse erfolgt, so dass die Zustellbewegung sich aus einer radialen und axialen Komponente zusammensetzt. Hierzu sind innerhalb des Führungskranzes 22 die Böden der Führungsnuten schräg gesetzt, wie in Fig. 2 und in Fig. 1 durch das Bezugszeichen 52 verdeutlicht ist. Dieser Schrägwinkel ist in Fig. 1 angedeutet und mit der Winkelangabe α versehen. Der Winkel α liegt hierbei im Bereich zwischen 60 und 80, vorzugsweise 65 und 75°.

Da die Konzentratorelemente 46a, 46b aus magnetisch leitendem Material gebildet sind, wozu zumeist Ferrit oder ein sonstiger geeigneter oxidkeramischer Werkstoff verwendet wird, der aber vergleichsweise spröde und brüchig ist, sind an den Schiebern 44b Anschlagleisten 54 angeordnet, die aus festerem Material, welches magnetisch nicht leitend ist, gebildet sind. Hierzu wird bevorzugt Aluminium verwendet. Diese Anschlagleisten 54 sind in der Breite gegenüber der Breite der Konzentratorelemente 46a, 46b schmal gehalten, da ihnen nur Anschlagfunktion zukommt.

Wie recht deutlich aus Fig. 2 hervorgeht, weist jede Anschlagleiste 54 an ihrem radial innen liegenden Abschnitt bei 56 einen leistenartigen Vorsprung auf, der geringfügig, nämlich etwa 0,2 bis 0,6 mm bzw. 0,3 bis 0,4 mm über die der Spannhülse 3 benachbarte freie Stirnfläche der Konzentratorelemente 46a und 46b vorsteht. Dadurch ist bei der linearen Verschiebung der Schieber in Richtung auf die freie Stirnfläche 50 der Spannhülse 3 jeweils sichergestellt, dass die Aluminiumleisten 54 in Anschlag mit der freien Stirnfläche 50 der Spannhülse 3 gelangen und nicht die brüchigen Konzentratorelemente. Gleichwohl werden die Konzentratorelemente entsprechend nahe an die freie Stirnseite bzw. Stirnfläche der Spannhülse 3 herangefahren, so dass der Magnetfluss über die Konzentratorelemente sehr vorteilhaft in die Spannhülse 3 konzentriert bzw. gebündelt wird, um diese zu erwärmen.

Wie aus den Fig. 1 und 2 hervorgeht, ist schließlich ein weiterer Abschirmkragen 58 aus magnetisch leitendem, jedoch elektrisch nicht leitendem Material, insbesondere aus Ferrit vorgesehen, der ringförmig ausgebildet ist und sich im Wesentlichen axial zur Drehachse 7 und dabei sich nach außen in konisch erweiternd erstreckt. Der Kragen ist hierbei in einer Öffnung des Stellrings 38 angeordnet. Dies führt zu einer weiteren wirksamen Abschirmung des aus der Spannhülse 3 vorstehenden Teils des in der Spannhülse 3 eingespannten Werkzeugs und verhindert somit dessen Erwärmung.

Alternativ bzw. zusätzlich kann weiterhin ein mit 60 bezeichneter Induktionsaufsatz vorgesehen sein, der elektrisch leitend, jedoch magnetisch nicht leitend ist und vorzugsweise aus Kupfer gebildet ist. Der Induktionsaufsatz 60 ist hierbei als eine im Wesentlichen ebene Ringscheibe aus Kupfer gebildet, die jedoch mit der Front der Spannvorrichtung im Wesentlichen bündig ist, kann jedoch auch als konischer und nach außen vorstehender Induktionsaufsatz ausgebildet sein. Die dargestellte Ausführungsform mit der Kupferscheibe 60 ist jedoch aus Platzgründen sehr vorteilhaft, weil dadurch die kompakte Baueinheit der dargestellten Induktionsspannvorrichtung nicht beeinträchtigt wird.

Bei Betrieb der Induktionsspule werden durch etwaige austretende magnetische Streufelder Wirbelströme im Induktionsaufsatz 60 aus Kupfer erzeugt, die ihrerseits ein gegenwirkendes Magnetfeld erzeugen, welches abschwächend auf das magnetische Streufeld der Induktionsspule wirkt. Auch dadurch wird eine zusätzliche, nämlich aktive Abschirmung im äußeren Bereich der Spannhülse 3 bewerkstelligt.

Durch die Schrägführung der Schieber und damit durch die Schrägzustellung der innen an den Schiebern aufgenommenen Konzentratorelemente wird der Vorteil erreicht, dass die Konzentratorelemente nicht nur radial in Richtung zur Drehachse 7 sondern auch mit einer zusätzlichen axialen Komponente in Richtung der Spannhülse 3 in die Betriebsposition bewegt werden und damit auch eine optimale Ausrichtung der Induktionsspuleneinheiten 14a und 14b erreicht wird und zwar bei unterschiedlich großen Werkzeughaltern und damit unterschiedlich großen Spannhülsen für unterschiedliche Werkzeugdurchmesser. Hierbei ist es wesentlich, dass auch bei axial relativ zueinander ausgefahrenen Spuleneinheiten 14a, 14b die Spuleneinheiten jeweils günstig in Bezug auf den eigentlichen Schrumpfpassungsbereich innerhalb der Spannhülse angeordnet sind. Dies bedeutet für die in Fig. 2 links dargestellte und ausgefahrene Spuleneinheit 14b, dass diese jeweils möglichst im Bereich des freien Endes der Spannhülse 3 und diese Spannhülse noch ganz überdeckend angeordnet ist. Dabei soll zugleich gewährleistet sein, dass die an den Schiebern befindlichen Konzentratorelemente möglichst nahe an der freien Stirnfläche der Spannhülse liegen und diese weitgehend abschließen, so dass der von der Induktionsspule erzeugte Magnetfluss konzentriert in den zu erwärmenden Spannhülsenbereich eingeführt werden kann. Exakt dies wird durch die schräge Zuführung der Schieber und der damit verbundenen Konzentratorelemente erreicht, was bei einer rein radialen Zustellbewegung der Konzentratorelemente in Anpassung an unterschiedliche Spannhülsendurchmesser nicht möglich wäre.

Ersichtlich ist die dargestellte Ausführungsform so ausgelegt, dass nunmehr die Zustellung der Schieber mit den die freie Fläche der Spannhülse überdeckenden Konzentratorelementen separat und unabhängig von der Einstellung der axialen Länge der beiden Spuleneinheiten 14a und 14b voneinander vorgenommen werden kann. Dadurch lässt sich eine individuelle Einstellung ermöglichen, was insbesondere für einen vollautomatisierten Betrieb von Vorteil ist. Dies wird erreicht durch die Entkopplung des Stellkranzes 32 gegenüber dem äußeren Führungsring 26 unter Zwischenschaltung einer Wälzlagerung, wobei hierzu ein Kugelrollenband verwendet ist.

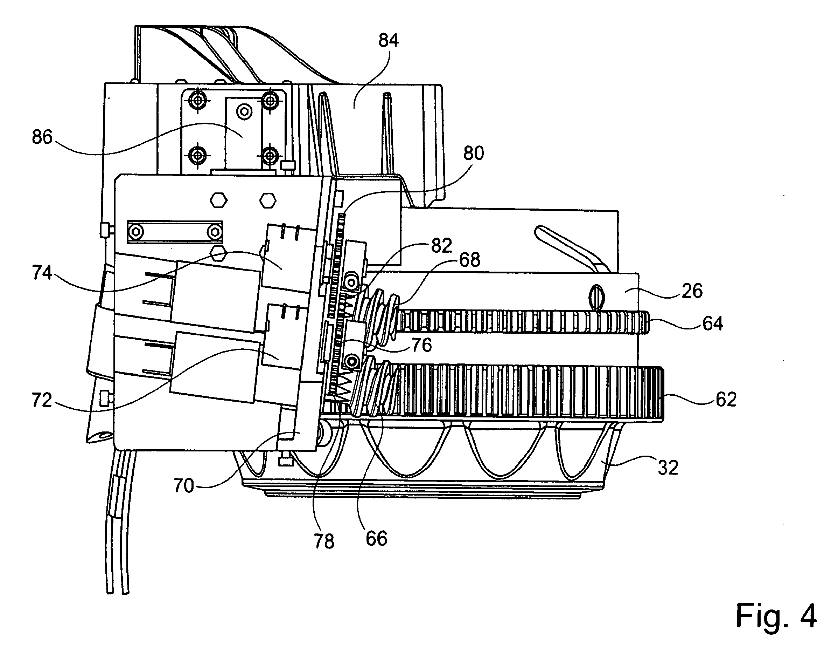

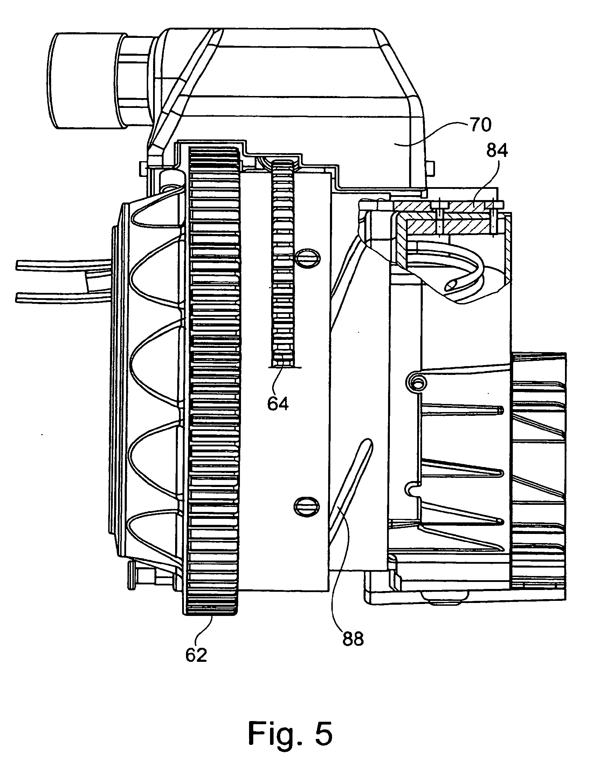

Für einen automatisierten Betrieb ist es zweckmäßig, wenn am äußeren Umfang des Stellkranzes eine Verzahnung vorgesehen ist, die hier als umlaufender Zahnkranz 62 ausgebildet ist. Ein weiterer Zahnkranz befindet sich am äußeren Umfang des äußeren Führungsringes 26 und ist mit 64 bezeichnet. Dadurch ist ein motorischer Betrieb sowohl des Stellkranzes 32 für die Verstellung der Schieber wie auch des äußeren Führungsringes 26 für die Axialverstellung der Spuleinheiten 14a, 14b relativ zueinander möglich. Dies ist insbesondere in den Fig. 4 und 5 verdeutlicht.

Im dargestellten Ausführungsbeispiel kämmen Schneckenwellen 66 und 68 mit Zahnkränzen 62 und 64, die über eine Welle an einem Aufspannschlitten 70 angeordnet sind, der auch zwei Motoren 72 und 74 aufnimmt. Der Motor 72 treibt hierbei über ein Zahnrad 76 ein mit der Schnecke 66 drehfest verbundenes Ritzel 78 an, so dass über den Motor 72 der Stellkranz 62 zum Vorrücken und Rückziehen der Schieber mit den Konzentratorelementen 46a, 46b betätigt werden kann. Separat hiervon kann durch den Motor 74 über eine Zahnrad-/ Ritzelpaarung 80, 82 die Schnecke 68 für die Drehung des äußeren Führungsringes 26 betätigt werden, so dass dieser zur axial Verstellung der Spuleneinheiten relativ zu einander betätigt werden kann.

Der Schlitten 70, der u. a. auch beide Motoren 72 und 74 einschließlich deren Getriebe trägt, ist auf einem vorrichtungsfesten Aufspanntisch 84 angeordnet und zwar verschieblich längs einer Linearführung 86. Dadurch kann der Schlitten 70 bei der Achsialverstellung der Spuleneinheiten dem äußeren Führungsring 26 folgen, der axial zum inneren und vorrichtungsfesten Laufring 28 verstellt wird. Diese Führung ergibt sich auch aus Fig. 5, aus welcher auch die Steuerkurven 88 auf dem Außenmantel des inneren Führungsringes 28 des Nocken-Steuerungsmechanismus für die Spulenverstellung ersichtlich sind. Hierbei sind insgesamt 4 Führungsnuten 88 vorgesehen, mit denen der äußere Führungsring 26 über entsprechende Nockenstifte (nicht gezeigt) zusammenwirkt.

Mit dieser Ausgestaltung sind sowohl Durchmesseranpassung und Längenanpassung in Abhängigkeit von unterschiedlichen Spannhülsengrößen und damit unterschiedlichen Werkzeugdurchmessem möglich. Zudem können die beiden Verstellungen motorisch gekoppelt aber auch unabhängig voneinander steuerbar sein, was für Sonderanwendungen zweckmäßig ist. In Folge der separaten Verstellungsmöglichkeit des Durchmessers und der Länge des Abstands der Spule der Spuleneinheiten ergibt sich eine einfache Ansteuerungsmöglichkeit für den vollautomatischen Betrieb.

Hierbei können bezogen auf unterschiedliche Schrumpffutter die entsprechenden Geometrie- und Schrumpfparameter entweder aus einer externen Datenquellen eingelesen oder über einen geeigneten Scanner, der einen entsprechenden Datenträger auf dem Schrumpffutter abliest und damit abhängig von einer geeigneten Software dann die entsprechenden Einstellungen durch Ansteuerung der beiden Motoren 72 und 74 ermöglicht.

Die Geometriedaten des Futters können hierbei in unterschiedlicher Weise automatisch bestimmt werden, bspw. über digitale Bildverarbeitung, Laserscanner und Abstandssensoren, wodurch die Schrumpfparameter entsprechend der Größe des Schrumpffutters automatisch zugeordnet und die Spule in Bezug auf ihre axiale Länge entsprechend automatisch eingestellt werden kann. Zweckmäßiger kann für beide Motoren ein Schlitten verwendet werden, was für die angestrebte platzsparende und kompakte Bauweise von Vorteil ist.

Der Einsatz von Schneckenrädern ist deswegen vorteilhaft, weil hierdurch ein selbsthemmender Antrieb möglich ist, also zusätzliche Verriegelungsmechanismen für die eingestellte Betriebsstellung nicht erforderlich sind.

Soweit, was zweckmäßig ist, auf dem Stellkranz 32 und dem äußeren Führungsring 26 bereits eine entsprechende Verzahnung vorgesehen ist, kann die manuell betätigbare induktive Spannvorrichtung ohne weiteres nachträglich dann auf vollautomatischen bzw. halbautomatischen Betrieb umgerüstet werden.

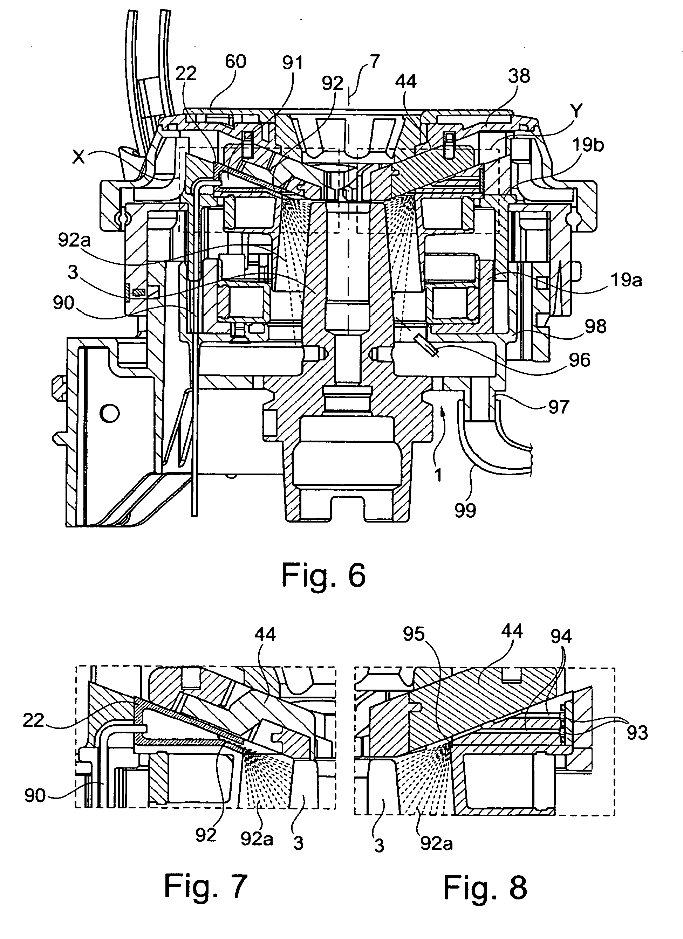

Das Beispiel, das in den Figuren 6 bis 8 dargestellt ist, zeigt weitere zweckmäßige Details für eine solche induktive Spannvorrichtung.

Zum einen ergibt sich aus Figur 6 eine mit dem Bezugszeichen 90 gekennzeichnete Kühlmittelzufuhrleitung, welche an ein hier nicht dargestelltes konventionelles Kühlmittelreservoir angeschlossen ist und in eine Hohlkammer 91 des Führungskranzes 22 einmündet. Im Bereich der Hohlkammer 91 ist der Führungskranz 22 an seinem radial innen gelegenen Ende mit einem schlitzförmigen düsenartigen Kanal 92 ausgebildet, durch den Kühlmittel in eine Kammer 92a eingedüst wird, welche die Spannhülse 3 umgibt. Als Kühlmittel kann jedes geeignete Kühlmittel verwendet werden. Beispielsweise kann über die schlitzartige Düse 92 ein Wassernebel innerhalb der Kammer 92a erzeugt werden. Als Kühlmittel kann jedoch auch Kühlgas oder ein sonstiges geeignetes Kühlmedium eingedüst werden. In einer Ausführungsform kann die Hohlkammer rundum laufend, also um die Achse 7 herum innerhalb des Führungskranzes 22 ausgebildet sein, um mit einem entsprechenden rundum laufenden schlitzartigen Kanal 92 zum Zwecke des Eindüsens des Kühlmittels versehen sein.

Alternativ kann, wie in der rechten Hälfte der Figur 6 dargestellt ist, das Kühlmittel über besser aus Figur 8 ersichtliche Ringleitungen 93 geführt werden, von denen radiale über den Umfang verteilte Kanäle 94 abzweigen, von wo das Kühlmittel dann über düsenartige Öffnungen 95 in die Hohlkammer 92 eingedüst wird. Die Öffnungen 95 können gleichmäßig um die Achse 7 herum verteilt im Führungskranz 22 oder wahlweise kann eine oder mehrere Öffnung(en) umlaufend schlitzartig im Führungskranz 22 ausgebildet sein.

Durch das Kühlmittel erfolgt in adäquater Weise die Kühlung der Spannhülse 5 in sehr wirksamer Weise.

Alternativ oder zusätzlich kann schließlich eine Temperaturmesseinheit 96 vorgesehen sein, die für die Steuerung der Erwärmungs- und Abkühlvorgänge der induktiven Spannvorrichtung dient und mit üblichen konventionellen Temperartursensoren und dergleichen ausgestattet sein kann.

Schließlich ist an einem rohrförmigen Stutzen 97 am Gehäuseelement 98 ein Schlauch 99 vorgesehen, über den das Kühlfluid aus der Hohlkammer 92a abgesaugt bzw. abgeführt werden kann. Selbstverständlich können die Absaugeinrichtung, hier dargestellt durch die Bauteile 97 und 99, ebenso wie die Kühlmittelleitung 90 und die Temperaturmesseinheit unterschiedlich ausgebildet und innerhalb der induktiven Spannvorrichtung in jeder geeigneten Weise platziert und angeordnet sein.

## Patentansprüche

1. Vorrichtung zum induktiven Ein- und Ausspannen eines Werkzeugschafts (9) eines Werkzeugs, insbesondere eines Rotationswerkzeugs, in einem Werkzeughalter, der eine an ihrem freien Ende offene Einspannhülse (3) aus elektrisch leitendem Werkstoff zur reibschlüssigen Aufnahme des Werkzeugschafts aufweist, wobei die Spannhülse (3) mit dem Werkzeughalter (1) eine Drehachse (7) bildet, mit einem die Spannhülse (3) umgebenden Induktionsspulenaufbau (13) aus zwei zu einander gleichachsig angeordneten und axial relativ zueinander verstellbaren Spuleneinheiten 14a, 14b, einer Konzentratoranordnung (19a, 19b) aus magnetisch leitendem und elektrisch nicht leitendem Material, welche den Induktionsspulenaufbau (13) umgibt, und mit einer weiteren Konzentratoranordnung (46) aus magnetisch leitendem und elektrisch nicht leitendem Material, welche aus mehreren im Wesentlichen ringförmig gruppierten Konzentratorelementen (46a, 46b) gebildet ist, welche relativ zur Drehachse (7) in ihre Betriebsstellung zur induktiven Erwärmung der Spannhülse (3) verstellbar sind, in welcher die Konzentratorelemente (46a, 46b) die freie Stirnfläche (50) der Spannhülse (3) zumindest teilweise überdecken,
**dadurch gekennzeichnet, dass**
die Konzentratorelemente (46a, 46b) schräg relativ zur Drehachse (7) mit einer radialen und axialen Komponente in ihre Betriebsstellung zur induktiven Erwärmung der Spannhülse (3) zustellbar sind, in welcher die Konzentratorelemente die freie Stirnfläche (50) der Spannhülse (3) zumindest teilweise radial überdecken.

2. Vorrichtung nach Anspruch 1
**dadurch gekennzeichnet, dass**
die Verschiebung der Konzentratorelemente (46a, 46b) translatorisch erfolgt.

3. Vorrichtung nach Anspruch 1 oder 2
**dadurch gekennzeichnet, dass**
die Konzentratorelemente (46a, 46b) jeweils in Schiebern (44) aufgenommen sind, die unter einem Winkel α von 60 bis 80°, vorzugsweise von 65 bis 75° relativ zur Drehachse translatorisch (linear) verschiebbar sind.

4. Vorrichtung nach Anspruch 3,
**dadurch gekennzeichnet, dass**
die schlittenartigen Schieber (44) aus magnetisch nicht leitendem Material, vorzugsweise aus keramischem Material oder Kunststoff gebildet und die Konzentratorelemente (46a, 46b) jeweils am freien und in Richtung der Drehachse weisenden Ende der Schieber (44) aufgenommen sind.

5. Vorrichtung nach Anspruch 4,
**dadurch gekennzeichnet, dass**
sechs ringartig gruppierte Schieber (44) vorgesehen sind, die in linear gerichteten Nuten eines Führungskranzes (22) aus magnetisch nicht leitendem Material verschiebbar geführt sind.

6. Vorrichtung nach einem der Ansprüche 3 bis 5,
**dadurch gekennzeichnet, dass**
dass zumindest ein Teil der Schieber, vorzugsweise in der ringartigen Gruppierung jeder zweite Schieber (44b), jeweils eine Anschlagleiste (54, 56) aus magnetisch nicht leitendem Material, vorzugsweise Aluminium, trägt, welche als Anschlag (56) geringfügig, nämlich 0,2 bis 0,6 mm, vorzugsweise 0,3 bis 0,4 mm über die in Richtung auf die Spannhülse 3 weisende Stirnfläche des Konzentratorelements (46b) vorsteht.

7. Vorrichtung nach einem der Ansprüche 3 bis 6,
**dadurch gekennzeichnet, dass**
die Steuerung der Schiebebewegung der Schieber (44) durch Nockenstifte (42) an den Schiebern erfolgt, die in entsprechende Steuerkurven (40) eines Stellringes (38) eingreifen.

8. Vorrichtung nach einem der vorhergehenden Ansprüche,
**dadurch gekennzeichnet, dass**
ein zusätzlicher ringförmiger Konzentrator (58) vorgesehen ist, der feststehend im radialen Zwischenraum zwischen den Spuleneinheiten (14a, 14b) und der an den Schiebern (44) aufgenommenen Konzentratorelemente (46a, 46b) angeordnet ist.

9. Vorrichtung nach einem der vorhergehenden Ansprüche,
**dadurch gekennzeichnet, dass**
die Vorrichtung einen ringförmigen Induktionsaufsatz (60) aus magnetisch nicht leitendem und elektrisch leitendem Material, vorzugsweise Kupfer, trägt, welches so ausgebildet und/oder angeordnet ist, dass dieser als aktives Abschirmelement ein magnetisches Gegenfeld gegenüber von der Induktionsspule erzeugten magnetischen Streufeldern aufbaut.

10. Vorrichtung nach Anspruch 8 oder 9,
**dadurch gekennzeichnet, dass**
der zusätzliche Konzentrator (58) und/oder Induktionsaufsatz (60) an einem stirnseitig angeordneten Abdeckring angeordnet sind, der gehäusefest oder am Stellkranz (32) angeordnet ist.

11. Vorrichtung nach Anspruch 1 oder einem der Unteransprüche 2 bis 10,
**dadurch gekennzeichnet, dass**
die beiden Spuleneinheiten (14a, 14b) einschließlich der zugeordneten Konzentratorhülsen (19a, 19b) über eine Längsführung relativ zu einander axial verstellbar sind, wobei die Führung der Konzentratorhülse (19b) längs eines inneren Führungsringes (28) erfolgt, der von einem konzentrisch darüber angeordnetem äußeren Führungsring (26) übergriffen ist, wobei die beiden Führungsringe (26, 28) zum Zwecke der Axialverstellung der Spuleneinheit (14a, 14b) über einen Nockenmechanismus miteinander kommunizieren.

12. Vorrichtung nach Anspruch 11,
**dadurch gekennzeichnet, dass**
der innere Führungsring (28) an seinem Außenumfang mehrere, vorzugsweise vier Steuerkurven aufweist, mit denen der äußere Führungsring (26) durch je eine Nocke kommuniziert.

13. Vorrichtung nach Anspruch 11 oder 12,
**dadurch gekennzeichnet, dass**
ein Stellkranz (32) für die lineare Zustellung der Schieber (44) und Konzentratorelemente (46) drehbar auf dem äußeren Führungsring (26) gelagert ist.

14. Vorrichtung nach Anspruch 13,
**dadurch gekennzeichnet, dass**
die Lagerung des Stellkranzes auf dem äußeren Führungsring (26) durch ein Wälzlager, insbesondere ein Kugellagerband (34) erfolgt.

15. Vorrichtung nach Anspruch 13 oder 14,
**dadurch gekennzeichnet, dass**
auf dem Stellkranz (32) und auf dem äußeren Führungsring (26) je ein Zahnkranz für den Drehantrieb des Stellkranzes (32, 38) und des äußeren Führungsringes (28) vorgesehen ist.

16. Vorrichtung nach Anspruch 15,
**dadurch gekennzeichnet, dass**
der Antrieb der Zahnkränze (62, 64) des Stellkranzes (32, 38) und äußeren Führungsrings (26) jeweils motorisch und über ein Getriebe erfolgt.

17. Vorrichtung nach Anspruch 16,
**dadurch gekennzeichnet, dass**
der Motor und das Getriebe (72, 76, 78, 66) für den Stellkranz (32, 38) und der Motor und das Getriebe (74, 80, 82, 68) für den äußeren Führungsring (26) auf einem gemeinsamen Schlitten (70) angeordnet sind, der auf einer Linearführung (86) auf einem vorrichtungsfesten Aufspanntisch (84) angeordnet ist, derart, dass beide Motoren und Getriebe zusammen bei einer Axialverstellung beider Spuleneinheiten mit dem äußeren Führungsring (26) verfahren werden.

18. Vorrichtung nach Anspruch 16 oder 17,
**dadurch gekennzeichnet, dass**
für den Antrieb des Stellkranzes (32, 38) und des äußeren Führungsringes (26) jeweils eine Schneckenwelle (66, 68) verwendet ist, welches mit dem jeweiligen Zahnradkranz (62, 64) in Eingriff steht und selbsthemmend wirkt.

## Claims

1. Apparatus for the inductive clamping and unclamping of a tool shaft (9) of a tool, particularly a rotary tool, in a tool holder, which has a clamping sleeve (3), which is open at its free end, of electrically conductive material for the frictionally engaged accommodation of the tool shaft, wherein the clamping sleeve (3) defines together with the tool holder (1) a rotary axis (7), including an induction coil assembly surrounding the clamping sleeve (3) comprising two coil units (14a, 14b), which are arranged coaxially with one another and are axially moveable relative to one another, a concentrator assembly (19a, 19b) of magnetically conductive and electrically non-conductive material, which surrounds the induction coil assembly (13), and including a further concentrator assembly (46) of magnetically conductive and electrically non-conductive material, which is constituted by a plurality of substantially annually grouped concentrator elements (46a, 46b), which are moveable relative to the rotary axis (7) into their operational position for the inductive heating of the clamping sleeve (3), in which the concentrator elements (46a, 46b) at least partially overlap with the free end surface (50) of the clamping sleeve (3), **characterised in that** the concentrator elements (46a, 46b) are advanceable obliquely relative to the rotary axis (7) with a radial and axial component into their operational position for the inductive heating of the clamping sleeve (3), in which the concentrator elements at least partially radially overlap with the free end surface (50) of the clamping sleeve (3).

2. Apparatus as claimed in claim 1, **characterised in that** the movement of the concentrator elements (46a, 46b) occurs in translation.

3. Apparatus as claimed in claim 1 or 2, **characterised in that** the concentrator elements (46a, 46b) are received in respective sliders (44), which are moveable in translation (linearly) at an angle α of 60 to 80°, preferably 65 to 75°, relative to the rotary axis.

4. Apparatus as claimed in claim 3, **characterised in that** the sliding carriage-like sliders (44) are formed of magnetically non-conductive material, preferably of ceramic material or plastic, and the concentrator elements (46a, 46b) are each received at the free end, pointing in the direction of the rotary axis, of the sliders (44).

5. Apparatus claimed in claim 4, **characterised in that** six annually grouped sliders (44) are provided, which are moveably guided in linearly directed grooves of a guide ring (22) of magnetically non-conductive material.

6. Apparatus claimed in one of claims 3 to 5, **characterised in that** at least a proportion of the sliders, preferably every second slider (44b) in the annular grouping, carries a respective abutment bar (54, 56) of magnetically non-conductive material, preferably aluminium, which projects in the form an abutment (56) slightly, namely 0.2 to 0.6mm, preferably 0.3 to 0.5mm, beyond the end surface of the concentrator element (46b) pointing in the direction towards the clamping sleeve (3).

7. Apparatus claimed in one of claims 3 to 6, **characterised in that** the control of the sliding movement of the sliders (44) is effected by lifter pegs (42) on the sliders, which engage in corresponding control curves (40) in a positioning ring (38).

8. Apparatus claimed in one of the preceding claims, **characterised in that** an additional, annular concentrator (58) is provided which is fixedly arranged in the radial gap between the coil units (14a, 14b) and the concentrator elements (46a, 46b) received on the sliders (44).

9. Apparatus claimed in one of the preceding claims, **characterised in that** the apparatus carries an annular induction attachment (60) of magnetically non-conductive and electrically conductive material, preferably copper, which is so constructed and/or arranged that, acting as an active shielding element, it creates an opposing magnetic field against the magnetic stray fields produced by the induction coil.

10. Apparatus as claimed in claim 8 or 9, **characterised in that** the additional concentrator (58) and/or induction attachment (60) are arranged on a cover ring arranged on the end surface, which is arranged fixed to the housing or on the positioning ring (32).

11. Apparatus claimed in claim 1 or one of the depending claims 2 to 10, **characterised in that** the two coil units (14a, 14b) including the associated concentrator sleeves (19a, 19b) are axially moveable relative to one another by means of a longitudinal guide, wherein the guidance of the concentrator sleeve (19b) is effected along the length of an inner guide ring (28), over which engages an outer guide ring (26), which is arranged concentrically above it, wherein the two guide rings (26, 28) communicate with one another for the purpose of axial movement of the coil unit (14a, 14b) via a cam mechanism.

12. Apparatus claimed in claim 11, **characterised in that** on its outer periphery the inner guide ring (28) has a plurality, preferably four, of control curves, with which the outer guide ring (26) communicates by a respective cam.

13. Apparatus claimed in claim 11 or 12, **characterised in that** a positioning ring (32) for the linear advancing of the sliders (44) and concentrator elements (46) is rotatably mounted on the outer guide ring (26).

14. Apparatus as claimed in claim 13, **characterised in that** the mounting of the positioning ring on the outer guide ring (26) is effected by means of a roller bearing, particularly a ball bearing band (34).

15. Apparatus as claimed in claim 13 or 14, **characterised in that** provided on the positioning ring (32) and on the outer guide ring (26) there is a respective toothed ring for the rotary drive of the positioning ring (32, 38) and of the outer guide ring (28).

16. Apparatus as claimed in claim 15, **characterised in that** the drive of the toothed ring (62, 64) of the positioning ring (32, 38) and outer guide ring (26) is effected in each case by a motor and via gear mechanism.

17. Apparatus as claimed in claim 16, **characterised in that** the motor and the gear mechanism (72, 76, 78, 66) for the positioning ring (32, 38) and the motor and the gear mechanism (74, 80, 82, 68) for the outer guide ring (26) are arranged on a common sliding carriage (70), which is arranged on a linear guide (86) on a clamping table (84) fixed to the apparatus such that both motors and gear mechanisms are moved together in the event of axial movement of both coil units with the outer ring (26).

18. Apparatus as claimed in claim 16 or 17, **characterised in that** a respective worm shaft (66, 68) is used for the drive of the positioning ring (32, 38) and of the outer guide ring (26), which is in engagement with the respective toothed wheel (62, 64) and has a self-locking action.

## Revendications

1. Dispositif de serrage et de desserrage inductifs d'une queue d'outil (9) d'un outil, en particulier d'un outil de rotation, dans un porte-outil qui présente une douille de serrage (3), ouverte à son extrémité libre, en matériau électriquement conducteur pour loger par friction la queue d'outil, la douille de serrage (3) formant avec le porte-outil (1) un axe de rotation (7), avec une structure de bobine d'induction (13) entourant la douille de serrage (3) et composée de deux unités de bobine (14a, 14b) disposées de façon coaxiale entre elles et de façon déplaçable axialement l'une par rapport à l'autre, avec un agencement de concentrateur (19a, 19b), en matériau magnétiquement conducteur et électriquement non conducteur, qui entoure la structure de bobine d'induction (13), et avec un autre agencement de concentrateur (46), en matériau magnétiquement conducteur et électriquement non conducteur, qui est formé de plusieurs éléments de concentrateur (46a, 46b) groupés de façon essentiellement annulaire qui peuvent être déplacés vers leur position de service par rapport à l'axe de rotation (7) pour le chauffage inductif de la douille de serrage (3) dans laquelle les éléments de concentrateur (46a, 46b) recouvrent au moins partiellement la face frontale (50) libre de la douille de serrage (3),
**caractérisé en ce que**
les éléments de concentrateur (46a, 46b) peuvent être approchés obliquement par rapport à l'axe de rotation (7), avec une composante radiale et axiale, vers leur position de service pour le chauffage inductif de la douille de serrage (3) dans laquelle les éléments de concentrateur recouvrent au moins partiellement radialement la face frontale (50) libre de la douille de serrage (3).

2. Dispositif selon la revendication 1,
**caractérisé en ce que**
le déplacement des éléments de concentrateur (46a, 46b) s'effectue par translation.

3. Dispositif selon la revendication 1 ou 2,
**caractérisé en ce que**
les éléments de concentrateur (46a, 46b) sont logés respectivement dans des coulisseaux (44) qui sont déplaçables par translation (linéairement) selon un angle α de 60 à 80°, de préférence de 65 à 75°, par rapport à l'axe de rotation.

4. Dispositif selon la revendication 3,
**caractérisé en ce que**
les coulisseaux (44) de type chariot sont formés de matériau magnétiquement non conducteur, de préférence en matériau céramique ou en matière plastique, et **en ce que** les éléments de concentrateur (46a, 46b) sont respectivement logés sur l'extrémité libre des coulisseaux (44) qui est dirigée vers l'axe de rotation.

5. Dispositif selon la revendication 4,
**caractérisé en ce**
**qu'**il est prévu six coulisseaux (44) groupés de façon annulaire qui sont guidés de façon déplaçable dans des rainures de direction linéaire d'une couronne de guidage (22) en matériau magnétiquement non conducteur.

6. Dispositif selon une des revendications 3 à 5,
**caractérisé en ce**
**qu'**au moins une partie des coulisseaux, de préférence un coulisseau sur deux (44b) dans le groupement de type annulaire, porte une barrette de butée (54, 56) en matériau magnétiquement non conducteur, de préférence en aluminium, qui, en tant que butée (56), fait légèrement saillie, à savoir de 0,2 à 0,6 mm, de préférence de 0,3 à 0,4 mm, au-dessus de la face frontale de l'élément de concentrateur (46b) dirigée vers la douille de serrage (3).

7. Dispositif selon une des revendications 3 à 6,
**caractérisé en ce que**
la commande du mouvement de coulissement des coulisseaux (44) s'effectue par des broches d'ergot (42) sur les coulisseaux qui entrent en prise dans des cames de commande (40) correspondantes d'un collier réglable (38).

8. Dispositif selon une des revendications précédentes,
**caractérisé en ce**
**qu'**il est prévu un concentrateur (58) annulaire supplémentaire qui est disposé de façon fixe dans l'espace intermédiaire radial entre les unités de bobine (14a, 14b) et les éléments de concentrateur (46a, 46b) logés dans les coulisseaux (44).

9. Dispositif selon une des revendications précédentes,
**caractérisé en ce que**
le dispositif porte une pièce d'induction rapportée (60) annulaire en matériau magnétiquement non conducteur et électriquement conducteur, de préférence du cuivre, qui est constitué et/ou disposé de sorte que celle-ci réalise, en tant qu'élément de blindage actif, un champ inverse magnétique par rapport à des champs de dispersion magnétiques produits par la bobine d'induction.

10. Dispositif selon la revendication 8 ou 9,
**caractérisé en ce que**
le concentrateur (58) supplémentaire et/ou la pièce d'induction rapportée (60) sont disposés sur une bague de couverture disposée en façade qui est disposée de façon fixe par rapport au carter ou sur la couronne de réglage (32).

11. Dispositif selon la revendication 1 ou selon l'une des sous-revendications 2 à 10,
**caractérisé en ce que**
les deux unités de bobine (14a, 14b), y compris les douilles de concentrateur (19a, 19b) affectées, sont déplaçables, via un guidage longitudinal, axialement l'une par rapport à l'autre, le guidage de la douille de concentrateur (19b) s'effectuant le long d'une bague de guidage (28) intérieure qui est coiffée d'une bague de guidage (26) extérieure disposée au-dessus de façon concentrique, les deux bagues de guidage (26, 28) communiquant l'une avec l'autre par le biais d'un mécanisme à ergot à des fins de déplacement axial de l'unité de bobine (14a, 14b).

12. Dispositif selon la revendication 11,
**caractérisé en ce que**
la bague de guidage (28) intérieure présente, sur sa circonférence extérieure plusieurs, de préférence quatre, cames de commande avec lesquelles la bague de guidage (26) extérieure communique par respectivement un ergot.

13. Dispositif selon la revendication 11 ou 12,
**caractérisé en ce**
**qu'**une couronne de réglage (32) pour l'approche linéaire des coulisseaux (44) et des éléments de concentrateur (46) est supportée en rotation sur la bague de guidage (26) extérieure.

14. Dispositif selon la revendication 13,
**caractérisé en ce que**
le support de la couronne de réglage sur la bague de guidage (26) extérieure est assuré par un palier à roulement, en particulier une bande de roulement à billes (34).

15. Dispositif selon la revendication 13 ou 14,
**caractérisé en ce que**,
sur la couronne de réglage (32) et sur la bague de guidage (26) extérieure, il est respectivement prévu une couronne dentée pour l'entraînement rotatif de la couronne de réglage (32, 38) et de la bague de guidage (28) extérieure.

16. Dispositif selon la revendication 15,
**caractérisé en ce que**
l'entraînement des couronnes dentées (62, 64) de la couronne de réglage (32, 38) et de la bague de guidage (26) extérieure s'effectue respectivement de façon motorisée et par le biais d'une transmission.

17. Dispositif selon la revendication 16,
**caractérisé en ce que**
le moteur et la transmission (72, 76, 78, 66) pour la couronne de réglage (32, 38), et le moteur et la transmission (74, 80, 82, 68) pour la bague de guidage (26) extérieure sont disposés sur un chariot (70) commun qui est disposé sur un guidage linéaire (86) sur une table de serrage (84) fixe par rapport au dispositif, de sorte que les deux moteurs et transmissions sont déplacés ensemble lors d'un déplacement axial des deux unités de bobine avec la bague de guidage (26) extérieure.

18. Dispositif selon la revendication 16 ou 17,
**caractérisé en ce que**,
pour l'entraînement de la couronne de réglage (32, 38) et de la bague de guidage (26) extérieure, il est respectivement utilisé un arbre de vis sans fin (66, 68) qui est en prise avec la couronne à roue dentée (62, 64) respective et exerce un effet autobloquant.
